# EUROPEAN PATENT SPECIFICATION

(11) **EP 3 913 904 B1**
(45) Date of publication and mention of the grant of the patent: **01.11.2023**
(21) Application number: 21181866.1
(22) Date of filing: 10.06.2020
(51) Int. Cl.: H04M 3/56, G10L 21/0216, G10L 25/84, G10L 25/21, G10L 25/30

(54) **TRAINING A MODEL FOR SPEECH AND NOISE ENERGY ESTIMATION**
TRAINIEREN EINES MODELLS ZUR ENERGIESCHÄTZUNG VON SPRACHE UND GERÄUSCH
APPRENTISSAGE D'UN MODÈLE POUR L'ESTIMATION DE L'ÉNERGIE DE LA PAROLE ET DU BRUIT

(30) Priority: 10.06.2019 US 201962859386 P
(43) Date of publication of application: 24.11.2021
(62) Divisional of application: 20179146.4
(73) Proprietor: Google LLC, Mountain View, CA 94043 (US)
(72) Inventor: Rudberg, Tore, 111 22 Stockholm (SE); Schuldt, Christian, 111 22 Stockholm (SE)
(74) Representative: Betten & Resch

(56) References cited:
- CN-A- 108 335 702
- US-A1- 2014 205 116
- YANGYANG XIA ET AL: "A Priori SNR Estimation Based on a Recurrent Neural Network for Robust Speech Enhancement", INTERSPEECH 2018, 1 January 2018 (2018-01-01), pages 3274-3278, XP055681498, ISCA DOI: 10.21437/Interspeech.2018-2423
- WENINGER FELIX ET AL: "Single-channel speech separation with memory-enhanced recurrent neural networks", 2014 IEEE INTERNATIONAL CONFERENCE ON ACOUSTICS, SPEECH AND SIGNAL PROCESSING (ICASSP), IEEE, 4 May 2014 (2014-05-04), pages 3709-3713, XP032617277, DOI: 10.1109/ICASSP.2014.6854294
- AI YANG ET AL: "Dnn-based Spectral Enhancement for Neural Waveform Generators with Low-bit Quantization", ICASSP 2019 - 2019 IEEE INTERNATIONAL CONFERENCE ON ACOUSTICS, SPEECH AND SIGNAL PROCESSING (ICASSP), IEEE, 12 May 2019 (2019-05-12), pages 7025-7029, XP033565570, DOI: 10.1109/ICASSP.2019.8683016 [retrieved on 2019-04-04]

## Description

### CROSS-REFERENCE TO RELATED APPLICATION

This application claims the benefit of US Application 62/859,386, filed June 10, 2019.

### TECHNICAL FIELD

This specification generally relates to speech processing.

### BACKGROUND

Speech processing is the study of speech signals and the processing methods of signals. The signals are usually processed in a digital representation, so speech processing can be regarded as a special case of digital signal processing, applied to speech signals. Aspects of speech processing includes the acquisition, manipulation, storage, transfer and output of speech signals. In the prior art, it is known from the patent application US2014/0205116A1, a system for generating an audio output using a master computing device and a plurality of client computing devices. The output is generated by selecting an audio signal having the highest signal-to-noise ratio or by mixing those audio signals having a signal-to-noise ratio greater than a reference threshold value.The publication MYUNG GYU SONG ET AL: "SPEECH RECOGNITION IN CAR NOISE ENVIRONMENTS USING MULTIPLE MODELS ACCORDING TO NOISE MASKING LEVELS", 1 October 1998 (1998-10-01), discloses how estimates of speech and noise can be estimated by performing spectral subtraction. The publication YANGYANG XIA ET AL: "A Priori SNR Estimation Based on a Recurrent Neural Network for Robust Speech Enhancement", INTERSPEECH 2018, 1 January 2018 (2018-01-01), pages 3274-3278.ISCA DOI: 10.21437/Interspeech.2018-2423 discloses a technique for a-priori SNR estimation using a recurrent neural network. The publication WEN INGER FELIX ET AL: "Single-channel speech separation with memory-enhanced recurrent neural networks",2014IEEE INTERNATIONAL CONFERENCE ON ACOUSTICS, SPEECH AND SIGNAL PROCESSING (ICASSP), IEEE, 4 May 2014 (2014-05-04), pages 3709-3713, DOI: 10.1109/ICASSP.2014.6854294 discloses a speech separation technique using recurrent neural networks.

### SUMMARY

Conducting an audio conference can sometimes be challenging for audio conference systems that have multiple microphones. Ideally, an audio conference device should transmit audio that contains the clearest speech, based on the audio detected by available microphones. Absent a push-to-talk system, the audio conference device may not be able to determine which microphone or combination of microphones is picking up the clearest speech. Simultaneously transmitting audio picked up by each microphone is not a practical option. Some microphone signals or beamformed audio channels that include multiple, filtered microphone signals may include more noise than others, and it would be best to ignore noisy microphones or audio channels. Some audio conference devices simply measure the energy level of audio received through each microphone or the audio level of an audio channel and transmit the audio with the highest energy level. Because some microphones may pick up more noise than others, the audio conference device may end up transmitting noisy audio during periods when a speaker is far from a microphone or nobody is speaking.

To select the microphone or audio channel with the cleanest audio, the audio conference device may use a model that is trained to determine the level of speech audio and the level of noise in each audio signal.

The invention provides a computer-implemented method according to claim 1, a system according to claim 7 and a computer readable medium according to claim 13. Preferable aspects are defined by the dependent claims.

Particular implementations of the subject matter described in this specification can be implemented so as to realize one or more of the following advantages. Participants in an audio conference system may clearly hear speakers on another end of the audio conference even under noisy conditions.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates an example audio conference system that applies a speech level estimation model to select an output channel.
FIG. 2 illustrates an example system for training speech level estimation models for use in an audio conference system.
FIG. 3 is a flowchart of an example process for applying speech level estimation to audio received by an audio conference system.
FIG. 4 is an example of a computing device and a mobile computing device.

Like reference numbers and designations in the various drawings indicate like elements.

### DETAILED DESCRIPTION

There are provided methods, systems, and apparatus, including computer programs encoded on a computer storage medium, for audio channel mixing. In some implementations, a method includes the actions of receiving first audio data for a first audio channel. The actions further include transmitting the first audio data. The actions further include, while receiving and transmitting the first audio data, receiving second audio data for a second audio channel; determining a first speech audio energy level of the first audio data and a first noise energy level of the first audio data; determining a second speech audio energy level of the second audio data and a second noise energy level of the second audio data; and determining whether to switch to transmitting the second audio data or continue transmitting the first audio data. The actions further include transmitting the first audio data or the second audio data.

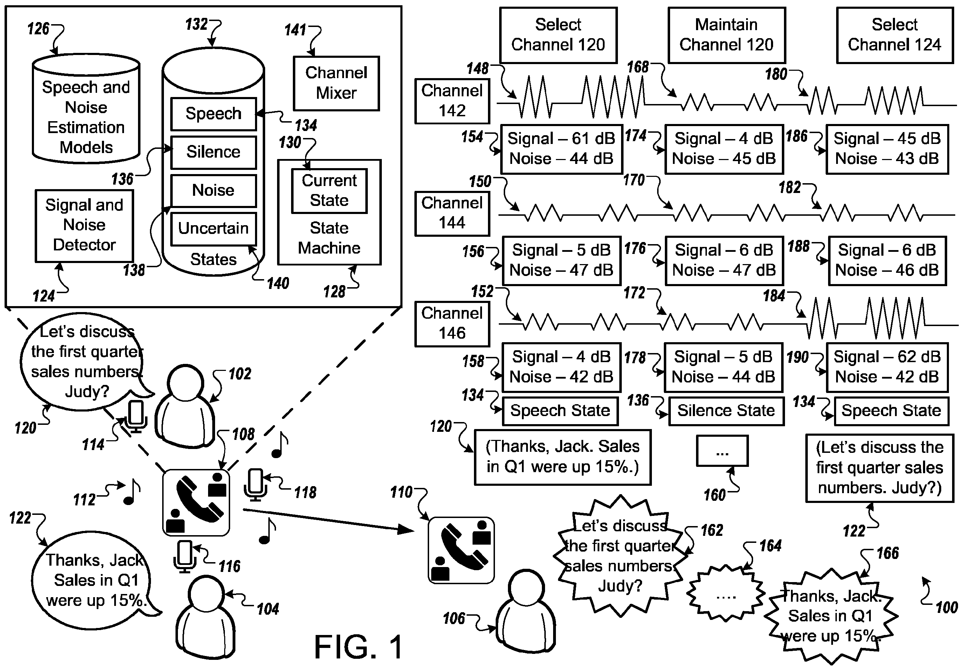

FIG. 1 illustrates an example audio conference system 100 that applies a speech level estimation model to select an output channel. Briefly, and as described in more detail below, user 102, user 104, and user 106 are participating in an audio conference using audio conference device 108 and audio conference device 110. While the user 102 and the user 104 are speaking, the audio conference device 108 selects an appropriate output channel to transmit to the audio conference device 110 by applying a speech level estimation model to the received audio.

In live audio systems, e.g., audio conferencing systems or videoconferencing systems, multiple microphones are often used, for example, to capture speech in large rooms. This creates multiple input channels, for example, from the individual microphone channels directly, or from input channels produced by beamforming of the microphone signals or otherwise combining multiple microphone signals. It is then often desirable to downmix the input channels to fewer output channels, typically one channel. In the downmixing process, it is desirable to focus on desired sounds, and avoid mixing in unwanted sounds. For instance, in a conferencing system, it is desirable to pick up speech, but avoid mixing in other sounds that are disturbing to the meeting experience. FIG. 1 provides an example in which the audio conference system 100 can use one or more models 126 to enhance the selection of channels of audio data to provide.

In more detail, in the example of FIG. 1, the user 102 and the user 104 are in a room with the audio conference device 108. The user 106 is in another room with the audio conference device 110. The audio conference device 108 and the audio conference device 110 may be any type of computing device that are configured to detect audio and transmit and receive audio data. For example, the audio conference device 108 and the audio conference device 110 may be phone, conference speaker phone, a tablet, a smart speaker, a laptop computer, a desktop computer, or any other similar computing device. The room that includes the audio conference device 108 may include background noise 112. The background noise 112 may be music, street noise, noise from an air vent, muffled speech from a neighboring room, etc.

The audio conference device 108 includes microphone 114, microphone 116, and microphone 118. The microphone 114 may be closest to user 102, and the microphone 116 may be closest to the user 104. Each microphone 114, 116, and 118 may pick up, or detect, the background noise 112. Using the techniques described below, the audio conference device 108 may be able to select the microphone with the best speech audio and transmit the audio from that microphone to the audio conference device 110 or select more than one microphone and mix the audio before transmitting the mixed audio to the audio conference device 110.

The user 102 speaks the utterance 120 by saying, "Let's discuss the first quarter sales numbers, July?" The audio conference device 108 detects the utterance 120 and the noise 112 through the microphones 114, 116, and 118 or another audio input device and processes the audio data receives through each microphone using an audio subsystem. The audio subsystem may include the microphones 114, 116, and 118, an analog to digital converter, a buffer, and various other audio filters. The microphones 114, 116, and 118 may be configured to detect sounds in the surrounding area such as speech, e.g., the utterances 120 and 122 and the noise 112. The analog to digital converter may be configured to sample the audio data detected by the microphones 114, 116, and 118. The buffer may store the sampled audio data for processing by the audio conference device 108 and/or for transmission by the audio conference device 110. In some implementations, the audio subsystem may be continuously active or may be active during times when the audio conference device 108 is expecting to receive audio such as during a conference call. In this case, the microphones 114, 116, and 118 may detect audio in response to the initiation of the conference call with the audio conference device 110. The analog to digital converter may be constantly sampling the detected audio data during the conference call. The buffer may store the latest sampled audio data such as the last ten seconds of sound. The audio subsystem may provide the sampled and filtered audio data of the utterances 120 and 122 and the noise 112 to another component of the audio conference device 108. In some implementations, the audio conference device 108 may include one audio subsystem or an audio subsystem for each microphone 114, 116, and 118.

The audio conference device 108 includes a signal and noise detector 124. The signal and noise detector 124 is configured to apply the processed audio from each microphone 114, 116, and 118 to the speech and noise estimation models 126. The signal and noise detector 124 may use the speech and noise estimation models 126 to estimate the amount of signal, such as speech, and the amount of noise received through each microphone 114, 116, and 118. The signal and noise detector 124 may provide a particular number of seconds of audio from each microphone 114, 116, and 118as an input to the speech and noise estimation models 126. For example, the signal and noise detector 124 may provide the last three seconds, ten seconds, fifteen seconds, or another period of time of audio received through each microphone 114, 116, and 118 as an input to the speech and noise estimation models 126. For ease of explanation, the example shown in FIG. 1 illustrates that the portions of audio processed by the signal and noise detector 124 correspond to the utterance 120, the utterance 122, and the silence 160 between the two utterances 120 and 122. This may occur in practice if the utterance 120, the utterance 122, and the silence 160 each last the same length of time, and the signal and noise detector 124 processes portion of audio that align with the natural breaks between the utterance 120, the utterance 122, and the silence 160.

The signal and noise detector 124 analyzes several seconds of the audio received through each microphone 114, 116, and 118. The several seconds may correspond to the period of time that it takes for the user 102 to speak utterance 120. The audio received through microphone 114 is shown on channel 142. The audio received through microphone 116 is shown on channel 144. The audio received through microphone 118 is shown on channel 146. The signal and noise detector 124 analyzes audio portion 148 of channel 142, audio portion 150 of channel 144, and audio portion 152 of channel 146 using the speech and noise estimation models 126. In some implementations, the signal and noise detector 124 may analyze audio in portions that include several milliseconds of audio, such as three or four milliseconds of audio. In a similar amount of time, the audio conference device 108 can select an audio channel for output.

The signal and noise detector 124 determines that the audio portion 148 of channel 142 has audio characteristics 154. The audio characteristics 154 indicate that the audio portion 148 of channel 142 has a signal level of sixty-one decibels and a noise level of forty-four decibels. The signal and noise detector 124 may determine the audio characteristics 154 by providing the audio portion 148 of channel 142 as an input to the speech and noise estimation models 126. The speech and noise estimation models 126 may output the audio characteristics 154 in response to receiving the audio portion 148.

Similarly, the signal and noise detector 124 determines that the audio portion 150 of channel 144 has audio characteristics 156. The audio characteristics 156 indicate that the audio portion 150 of channel 144 has a signal level of five decibels and a noise level of forty-seven decibels. The signal and noise detector 124 determines that the audio portion 152 of channel 246 has audio characteristics 158. The audio characteristics 158 indicate that the audio portion 152 of channel 146 has a signal level of four decibels and a noise level of forty-two decibels.

In some implementations, the signal and noise detector 124 and the speech and noise estimation models 126 are configured to determine the audio characteristics of different frequency bands of the audio channels. The signal and noise detector 124 may receive the audio portion 148 of channel 142 and segment the audio portion 148 into different frequency bands, such as one hundred hertz bands, one hundred-twenty five hertz bands, or another similar frequency band size. The signal and noise detector 124 may provide the audio of each frequency band as an input to a different speech and noise estimation model 126 that is trained to determine the audio characteristics 154 in that particular frequency band. Additionally, or alternatively, the noise estimation model 126 may be configured to determine the audio characteristics for multiple frequency bands in the audio portion 148 of the channel 142. In this instance, the signal and noise detector 124 may provide the audio portion 148 of channel 142 to the noise estimation model 126. The noise estimation model 126 may output audio characteristics 154 for each frequency band in the audio portion 148 of channel 142. The size of each frequency band may be one hundred hertz bands, one hundred-twenty five hertz bands, or another similar frequency band size.

The audio conference device 108 includes a state machine 128 that stores the current state 130 of the audio conference device 108. The state machine 128 maintains or adjusts the current state 130 of the audio conference device 108 based on the audio characteristics 154, 156, and 158. The state machine 128 may set the current state 130 to one of four states 132. The states 132 include a speech state 134, a silence state 136, a noise state 138, and an uncertain state. The state machine 128 may maintain or switch the current state 130 each time the signal and noise detector 124 generates additional audio characteristics.

The audio conference device 108 includes a channel mixer 141 that selects the audio channel for output based on the current state 130. In some instances, the channel mixer 141 may select multiple channels for output and combine the multiple channels into a single audio signal. In some instances, the channel mixer 141 may select a single channel for output. Each channel may correspond to a different microphone on the audio conference device 108.

In the speech state 134, the channel mixer 141 selects and outputs the channel with the highest signal, or speech, level. The state machine 128 may set the current state 130 to the speech state 134 if there are one or more channels that have a signal level above a signal level threshold. The state machine 128 may set the current state 130 to the speech state 134 if there are one or more channels that have a signal to noise ratio above a signal to noise level ratio. In some instances, the state machine 128 may set the current state 130 to the speech state 134 only if the nose level is below a noise level threshold. In the speech state 134, the channel mixer 141 sets the selected channel as an established speaker channel. In instances where the channel mixer 141 switches between different channels that are each established speaker channels, then the channel mixer 141 may combine, or mix, the established speaker channels. This may be helpful when there are multiple active speakers that may be taking turns speaking and/or speaking simultaneously.

In the silence state 136, the channel mixer 141 selects and outputs the channel or channels that were previously labeled as established speaker channels. The state machine 128 may set the current state 130 to the silence state 136 if all the channels have a signal level below a signal level threshold. The state machine 128 may set the current state 130 to the silence state 136 if all the channels have a signal to noise ratio below a signal to noise level ratio threshold.

In the noise state 138, the channel mixer 141 selects and outputs the channel or channels that were previously labeled as established speaker channels. The channel mixer 141 also identifies noisy channels and labels those channels accordingly. The channel mixer 141 may label more than one channel as a noisy channel. In the noise state 138 and other states, the channel mixer 141 may avoid switching to outputting a noisy channel. The channel mixer 141 can clear the noisy channel label if the channel is later identified as an established speaker channel. If there is an instance where the audio conference experiences silence, then the channel mixer 141 may label the channel with the lowest noise level as an established speaker channel. The state machine 128 may set the current state 130 to the noise state 138 if all the channels have a noise level above a noise level threshold. The state machine 128 may set the current state 130 to the noise state 138 if all the channels have a noise level greater than the signal level or if the noise level is greater than the signal level by a particular threshold or relative decibel level.

In the uncertain state 140, the channel mixer 141 selects and outputs the channel or channels that were previously labeled as established speaker channels. The state machine 128 may set the current state 130 to the uncertain state 140 if all the channels have a signal level within a certain range. This range may indicate that the signal can either be silence or speech. The range may be from thirty decibels to forty decibels or a similar range.

In the example shown in FIG. 1, after the signal and noise detector 124 processes the audio portion 148 of channel 142, the audio portion 150 of channel 144, and the audio portion 152 of channel 146 and generates the audio characteristics 154, the audio characteristics 156, and the audio characteristics 158, the state machine 128 sets the current state 130 to the speech state 134 because channel 142 has a signal level above a signal level threshold. For example, the signal level of sixty-one decibels is above a signal level threshold of fifty-five decibels. Based on the current state 130 being the speech state 134, the channel mixer 141 labels the channel 142 as an established speaker channel and outputs the audio of channel 142. The audio conference device 110 receives the audio of channel 142 from the audio conference device 108 and outputs the audio 162 through a speaker or another output device. The user 106 hears the user 102 speak, "Let's discuss the first quarter sales numbers, Judy?"

The signal and noise detector 124 continues to process the audio from the different channels by processing audio portion 168 of channel 142, the audio portion 170 of channel 144, and the audio portion 172 of channel 146 and generating the audio characteristics 174, the audio characteristics 176, and the audio characteristics 178. Based on the audio characteristics 174, the audio characteristics 176, and the audio characteristics 178, the state machine 128 sets the current state 130 to the silence state 136 because the signal level for each channel is below a signal level threshold. For example, the signal level of each channel 142, 144, and 146 is below twenty decibels.

Based on the current state 130 being the silence state 136, the channel mixer 141 continues to select for output the channel 142 because the channel 142 is an established speaker channel. The audio conference device 110 receives the audio of channel 142 from the audio conference device 108 and outputs the audio 162 through a speaker or another output device. The user 106 hears silence 164 that may consist of background noise 112 without any speech.

The signal and noise detector 124 continues to process the audio from the different channels by processing audio portion 180 of channel 142, the audio portion 182 of channel 144, and the audio portion 184 of channel 146 and generating the audio characteristics 186, the audio characteristics 188, and the audio characteristics 190. Based on the audio characteristics 174, the audio characteristics 176, and the audio characteristics 178, the state machine 128 sets the current state 130 to the silence state 134 because channel 146 has a signal level above a signal level threshold. For example, the signal level of sixty-two decibels is above a signal level threshold of fifty-five decibels. In this instance, the channel mixer 141 labels the channel 146 as an established speaker channel.

Based on the current state 130 being the speech state 134, the channel mixer 141 select, for output, the channel 146 because the channel 146 is an established speaker channel and the channel 146 has a signal level that is above a signal level threshold. The channel mixer 141 may mix channel 142 with channel 146 because channel 142 is also an established speaker channel. Alternatively, the channel mixer 141 may not mix channel 142 with channel 146 because the signal level of channel 146 is below the signal level threshold of fifty-five decibels.

The audio conference device 110 receives the audio of channel 146 from the audio conference device 108 and outputs the audio 166 through a speaker or another output device The user 106 hears the user 104 speak, "Thanks, Jack. Sales in Q1 were up fifteen percent."

In some implementations, the audio conference device 110 and audio conference device 108 may work together to identify the established speaker channels, noisy channels, and other channels. The audio conference device 110 and audio conference device 108 may select a channel from the audio conference device 110 for transmission to the audio conference device 108. The audio conference device 110 and audio conference device 108 may continuously analyze the input channels on both devices collectively and select the most appropriate channel for output to the other audio conference device.

In some implementations, the audio conference device 108 may include a noise reducer. The noise reducer may be configured to reduce noise on the selected audio channel before the audio conference device 108 transmits the audio of the selected audio channel to the audio conference device 110. The noise reducer may be about to reduce the noise by a particular amount, such as twelve decibels for the selected channel or for each frequency band in the selected audio channel. In some instances, the noise reducer may processed multiple audio channels before the audio conference system 108 mixes the multiple audio channels.

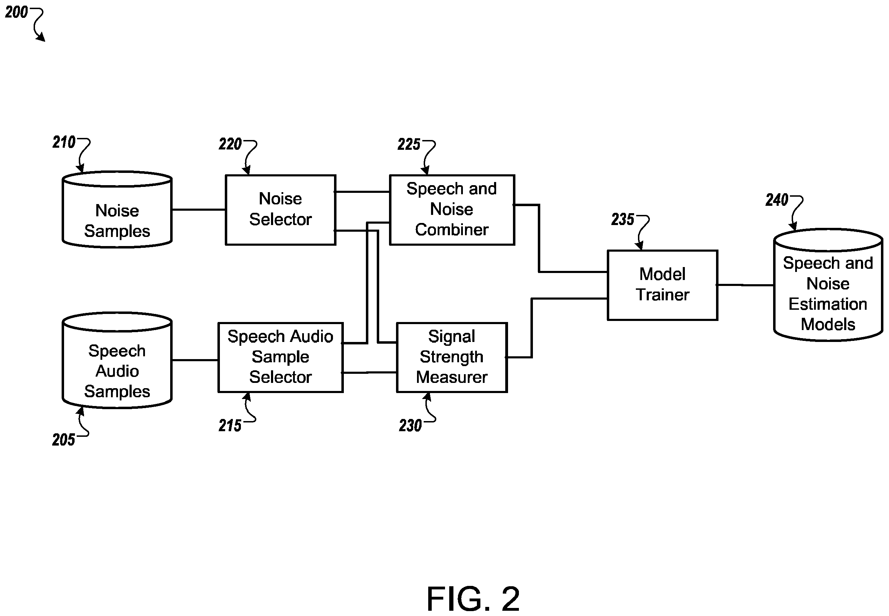

FIG. 2 illustrates an example system 200 for training speech level estimation models for use in an audio conference system. The system 200 may be included in the audio conference device 108 and/or the audio conference device 110 of FIG. 1 or included in a separate computing device. The separate computing device may be any type of computing device that is capable of processing audio samples. The system 200 may train speech and noise estimation models for use in the audio conference system 100 of FIG. 1.

The system 200 includes speech audio samples 205. The speech audio samples 205 include clean samples of different speakers speaking different phrases. For example, one audio sample may be a woman speaking "can I make an appointment for tomorrow" without any background noise. Another audio sample may be a man speaking "please give me directions to the store" without any background noise. In some implementations, the speech audio samples 205 may include an amount of background noise that is below a certain threshold because it may be difficult to obtain speech audio samples that do not include any background noise. In some implementations, the speech audio samples may be generated by various speech synthesizers with different voices. The speech audio samples 205 may include only spoken audio samples, only speech synthesis audio samples, or a mix of both spoken audio samples and speech synthesis audio samples.

The system 200 includes noise samples 210. The noise samples 210 may include samples of several different types of noise. The noise samples may include stationary noise and/or non-stationary noise. For example, the noise samples 210 may include street noise samples, road noise samples, cocktail noise samples, office noise samples, etc. The noise samples 210 may be collected through a microphone or may be generated by a noise synthesizer.

The noise selector 220 may be configured to select a noise sample from the noise samples 210. The noise selector 220 may be configured to cycle through the different noise samples and track those noise samples have already been selected. The noise selector 220 provides the selected noise sample to the speech and noise combiner 225 and the signal strength measurer 230. In some implementations, the noise selector 220 provides one noise sample to the speech and noise combiner 225 and the signal strength measurer 230. In some implementations, the noise selector 220 provides more than one noise sample to the speech and noise combiner 225 and the signal strength measurer 230 such as one office noise sample and one street noise sample or two office noise samples.

The speech audio sample selector 215 may operate similarly to the noise selector. The speech audio sample selector 215 may be configured to cycle through the different speech audio samples and track those speech audio samples that have already been selected. The speech audio sample selector 215 provides the selected speech audio sample to the speech and noise combiner 225 and the signal strength measurer 230. In some implementations, the speech audio sample selector 215 provides one speech audio sample to the speech and noise combiner 225 and the signal strength measurer 230. In some implementations, the speech audio sample selector 215 provides more than one speech audio sample to the speech and noise combiner 225 and the signal strength measurer 230 such as one speech sample of "what time is the game on" and another speech sample of "all our tables are booked for that time."

The speech and noise combiner 225 combines the one or more noise samples received from the noise selector 220 and the one or more speech audio samples received from the speech audio sample selector 215. The speech and noise combiner 225 combines the samples by overlapping them and summing the samples. In this sense, more than one speech audio samples will overlap to imitate more than one person talking at the same time. In instances where the received samples are not all the same length in time, the speech and noise combiner 225 may extend an audio sample by repeating the sample until the needed time length is reached. For example, if one speech audio samples is of "call mom" and another speech sample is of "can I make a reservation for tomorrow evening," then the speech and noise combiner 225 may concatenate multiple samples of "call mom" to reach the length of "can I make a reservation for tomorrow evening." In instances where the speech and noise combiner 225 combines multiple speech audio files, the speech and noise combiner 225 outputs the combined speech audio with noise added and the combined speech audio without noise added.

The signal strength measurer 230 calculates a signal strength of the individual speech audio sample included in each combined speech and noise sample and the signal strength of the individual noise sample included in each combined speech and noise sample. In some implementations, the signal strength measurer 230 calculates the speech audio signal strength and the noise signal strength for a particular time periods in each sample. For example, the signal strength measurer 230 may calculate the speech audio signal strength and the noise signal strength over a one-second period, a three-second period, or another time period. The strength measurer 230 may calculate additional signal strengths if there is audio remaining in the sample.

In some implementations, the signal strength measurer 230 calculates the speech audio signal strength and the noise signal strength for a different frequency bands in each sample. For example, the signal strength measurer 230 may calculate the speech audio signal strength and the noise signal strength for each of various one-hundred-hertz bands, of one-hundred-twenty-five-hertz bands, or of another size or type frequency bands.

In some implementations, the signal strength measurer 230 calculates the speech audio signal strength for a combined speech audio signal. In this instance, the signal strength measurer 230 calculates the signal strength of the combined speech audio signals in a similar fashion as described above. In some implementations, the signal strength measurer 230 calculates the noise signal strength for a combined noise signal. In this instance, the signal strength measurer 230 calculates the signal strength of the combined noise signals in a similar fashion as described above.

The model trainer 235 uses machine learning to train a model. The model trainer 235 trains the model to receive an audio sample that includes speech and noise and output a speech signal strength value for the speech included in the audio sample and a noise signal strength value for the noise included in the audio sample. To train the model, the model trainer 235 uses audio samples received from the speech and noise combiner 225 that include speech and noise and that are labeled with the speech signal strength value and the noise signal strength value. The training can include an iterative process in which the model trainer 235 provides example audio data as input to a model, receives an output of a model, and compares the model output with the label for the example audio data (e.g., labelled strength values that represent a target output for the model to predict). Based on differences between the output of the model and the label for the example, the model trainer 235 adjusts parameters of the model. For example, if the model has a neural network architecture, the model trainer 235 may use backpropagation, stochastic gradient descent, or another training algorithm to update the values of weights or other parameters of the model so that the model's estimate are closer to the labelled values.

In some implementations, the signal strength labels include a speech signal strength value and a noise signal strength value for each frequency band in the audio sample. In this instance, the model trainer 235 trains the model to generate a speech signal strength value and a noise signal strength for each frequency band upon receiving an audio data. The size of the frequency bands may be one hundred hertz, one hundred twenty-five hertz, or another similar size.

According to the claimed invention, the model trainer 235 trains a model for each frequency band. In this instance, the model trainer 235 receives audio samples and speech signal strength values and noise signal strength values for different frequency bands in the audio samples. The model trainer 235 trains each model using the audio samples and a respective speech signal strength value and a respective noise signal strength value. For example, the model trainer 235 may train a model for the 2.1-2.2 kHz band. The model trainer 235 may use the audio samples and the speech signal strength value and noise signal strength value for the 2.1-2.2 kHz bands in each audio sample. Additionally, or alternatively, the model trainer 235 trains each model using filtered audio samples for each frequency band and the speech signal strength values and the noise signal strength values for that frequency band. For example, the model trainer 235 filters the audio samples to isolate the 2.1-2.2 kHz band. The model trainer 235 trains the 2.1-2.2 kHz band using the filtered audio samples and the speech signal strength values and the noise signal strength values for the 2.1-2.2 kHz band. Before providing an audio input to this model, the system applies a 2.1-2.2 kHz band filter to the audio input.

The model trainer 235 stores the trained models in the speech and noise estimation models 240. Each model in the speech and noise estimation models 240 indicates whether it is configured to estimate the speech and noise levels for the whole audio sample or for a particular frequency band. Additionally, the each model in the speech and noise estimation models 240 may indicate whether any filtering should be applied to the audio before providing the audio to the model. For example, the 2.1-2.2 kHz band may indicate to filter the audio using a 2.1-2.2 kHz band filter before applying the model.

Various types of model architectures can be used. Examples of machine learning models that can be trained to estimate speech and noise levels, and/or states (e.g., estimate among speech state, noise state, silence state, and uncertain state), include: neural networks, classifiers, support vector machines, regression models, reinforcement learning models, clustering models, decision trees, random forest models, genetic algorithms, Bayesian models, and Gaussian mixture models. Different types of models can be used together as an ensemble or for making different types of predictions. Other types of models can also be used, such as statistical models and rule-based models.

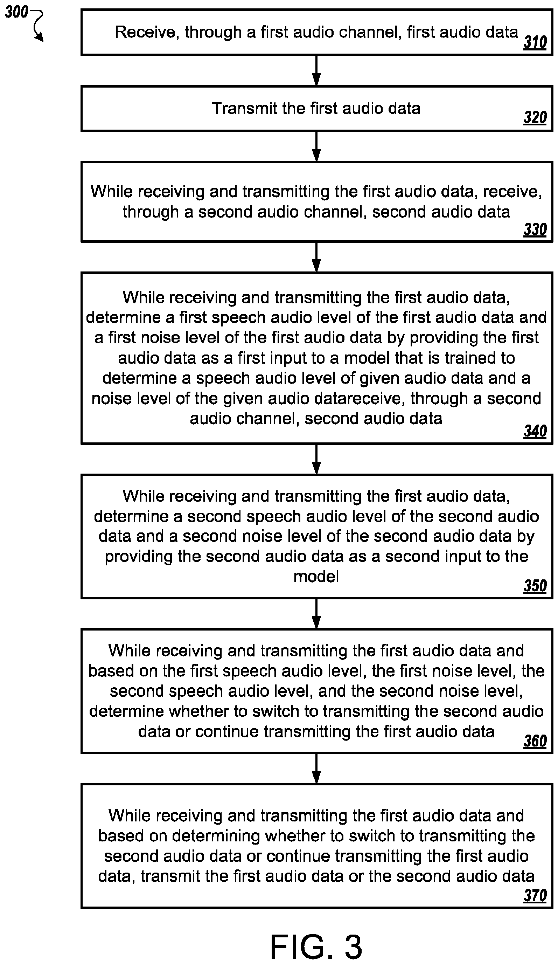

FIG. 3 is a flowchart of an example process 300 for applying speech level estimation to audio received by an audio conference system. In general, the process 300 receives audio data during an audio conference through several different microphones. The process determines the signal level and noise level of the audio received through each microphone and selects a microphone for transmitting to another audio conference system. The process 300 will be described as being performed by a computer system comprising one or more computers, for example, the system 100 of FIG. 1 and/or the system 200 of FIG. 2.

The system receives, through a first audio channel, first audio data (310). The system may be an audio conference device that is connected with another system, or audio conference device, during an audio conference. In some implementations, the system includes multiple microphones and receives the first audio data through a first microphone. For example, a user may say, "Let's begin today's meeting" directly into the first microphone.

The system transmits the first audio data (320) to another system that is connected to the system during the audio conference. The other system may output the first audio data through a speaker. For example, the speaker may output, "Let's begin today's meeting."

While receiving and transmitting the first audio data, the system receives, through a second audio channel, second audio data (330). The system may receive the second audio through second microphone. For example, another user may say, "Thanks, we will begin with an update from each office." The other user may be sitting near both the first microphone and the second microphone. In some implementations, the first audio channel and the second audio channel are combinations of multiple beam formed signals, such as from multiple microphones.

While receiving and transmitting the first audio data, the system determines a first speech audio energy level of the first audio data and a first noise energy level of the first audio data by providing the first audio data as a first input to a model that is trained to determine a speech audio energy level of given audio data and a noise energy level of the given audio data (340). In some implementations, the system provides the first audio data as an input to the model, as the system receives the first audio data. The model may indicate the first speech audio energy level of the first audio data and the first noise energy level of the first audio data. The system may compare the first speech audio energy level to a speech energy level threshold and the first noise energy level to a noise energy level threshold. Based on the comparison, the system may determine that the first audio channel is an established speaker channel.

While receiving and transmitting the first audio data, the system determines a second speech audio energy level of the second audio data and a second noise energy level of the second audio data by providing the second audio data as a second input to the model (350). As the system receives the second audio data, the system provide the second audio data to the model. The model may indicate the second speech audio energy level of the second audio data and the second noise energy level of the second audio data. The system may compare the second speech audio energy level to a speech energy level threshold and the second noise energy level to a noise energy level threshold. Based on the comparison, the system may determine that the second audio channel is also an established speaker channel. During this same time, the system may continue to provide audio data received through the first channel to the model.

In some implementations, the system determines speech audio energy levels and noise energy levels for each frequency band in the first audio data and the second audio data. For example, the system may determine the speech audio energy levels and noise energy levels for each one hundred hertz bands in the first audio data and the second audio data.

While receiving and transmitting the first audio data and based on the first speech audio energy level, the first noise energy level, the second speech audio energy level, the second noise energy level, the system determines whether to switch to transmitting the second audio data or continue transmitting the first audio data (360). In some implementations, the system updates the state of a state machine. The different states of the state machine may be speech, noise, silence, and uncertain. The system may switch the state machine to a different state depending on the first speech audio energy level, the first noise energy level, the second speech audio energy level, and the second noise energy level or maintain the current state. The system may determine whether to switch to transmitting the second audio data or continue transmitting the first audio data depending on the state. If the state is the noise, silence, or uncertain state, then the system will continue to transmit the first audio data if the first audio channel is an established speaker channel. If the state is the speech state, then the system selects that audio channel with the highest speech level.

Based on determining whether to switch to transmitting the second audio data or continue transmitting the first audio data, the system transmits the first audio data or the second audio data (370). In some implementations, the system transmits the first audio data. In some implementations, the system transmits the second audio data. In some implementations, the system mixes the first audio data and the second audio data and transmits the mixed audio data. Depending on the configuration, the system may transmit the audio data to any of various different devices or systems. For example, during a call or video conference, the system may send the audio data to devices of participants in the call or video conference over a communication network (e.g., one or more of a wireless network, a wired network, a cellular network, a satellite network, a local area network, a wide area network, the Internet, etc.). These devices may be, for example, conference systems, computers, mobile devices, etc., which may receive and play audio based on the audio data sent. As another example, the system may send the audio data over a communication network to a server system or other system that manages or supports the call or videoconference. The server system or other system may then forward or stream the audio data to other devices participating in the call or video conference.

In some implementations, the system trains the model using speech audio samples and noise samples. The system generates training samples by combining the audio samples and the noise samples. The system also determines the noise energy level of each noise sample and the speech audio energy level of each speech audio sample. The system trains, using machine learning, the model using the combined speech and noise samples, the speech audio energy levels of the underlying speech audio samples, and the noise energy levels of the underlying noise samples.

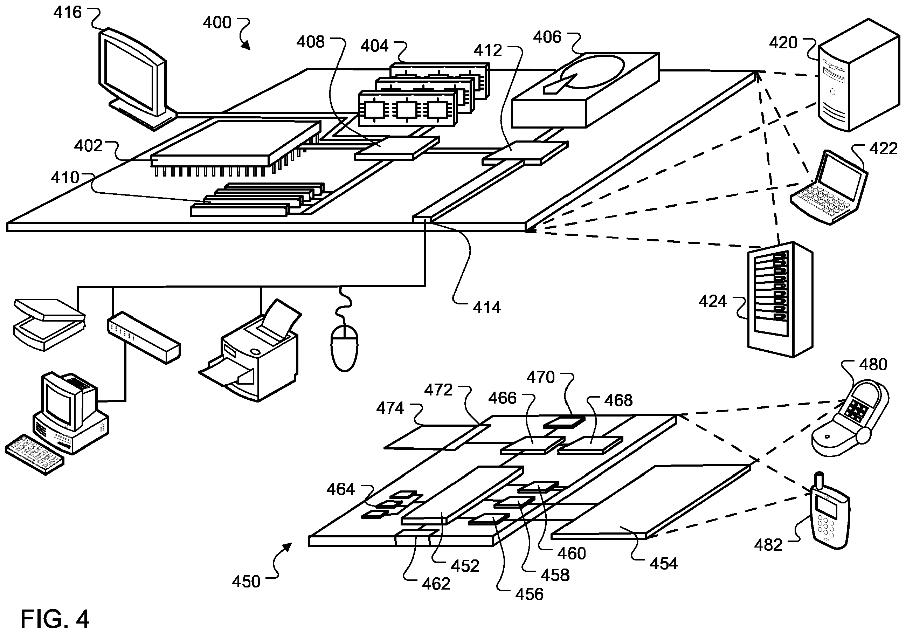

FIG. 4 shows an example of a computing device 400 and a mobile computing device 450 that can be used to implement the techniques described here. The computing device 400 is intended to represent various forms of digital computers, such as laptops, desktops, workstations, personal digital assistants, servers, blade servers, mainframes, and other appropriate computers. The mobile computing device 450 is intended to represent various forms of mobile devices, such as personal digital assistants, cellular telephones, smart-phones, and other similar computing devices. The components shown here, their connections and relationships, and their functions, are meant to be examples only, and are not meant to be limiting.

The computing device 400 includes a processor 402, a memory 404, a storage device 406, a high-speed interface 408 connecting to the memory 404 and multiple high-speed expansion ports 410, and a low-speed interface 412 connecting to a low-speed expansion port 414 and the storage device 406. Each of the processor 402, the memory 404, the storage device 406, the high-speed interface 408, the high-speed expansion ports 410, and the low-speed interface 412, are interconnected using various busses, and may be mounted on a common motherboard or in other manners as appropriate. The processor 402 can process instructions for execution within the computing device 400, including instructions stored in the memory 404 or on the storage device 406 to display graphical information for a GUI on an external input/output device, such as a display 416 coupled to the high-speed interface 408. In other implementations, multiple processors and/or multiple buses may be used, as appropriate, along with multiple memories and types of memory. Also, multiple computing devices may be connected, with each device providing portions of the necessary operations (e.g., as a server bank, a group of blade servers, or a multi-processor system).

The memory 404 stores information within the computing device 400. In some implementations, the memory 404 is a volatile memory unit or units. In some implementations, the memory 404 is a non-volatile memory unit or units. The memory 404 may also be another form of computer-readable medium, such as a magnetic or optical disk.

The storage device 406 is capable of providing mass storage for the computing device 400. In some implementations, the storage device 406 may be or contain a computer-readable medium, such as a floppy disk device, a hard disk device, an optical disk device, or a tape device, a flash memory or other similar solid state memory device, or an array of devices, including devices in a storage area network or other configurations. Instructions can be stored in an information carrier. The instructions, when executed by one or more processing devices (for example, processor 402), perform one or more methods, such as those described above. The instructions can also be stored by one or more storage devices such as computer- or machine-readable mediums (for example, the memory 404, the storage device 406, or memory on the processor 402).

The high-speed interface 408 manages bandwidth-intensive operations for the computing device 400, while the low-speed interface 412 manages lower bandwidth-intensive operations. Such allocation of functions is an example only. In some implementations, the high-speed interface 408 is coupled to the memory 404, the display 416 (e.g., through a graphics processor or accelerator), and to the high-speed expansion ports 410, which may accept various expansion cards (not shown). In the implementation, the low-speed interface 412 is coupled to the storage device 406 and the low-speed expansion port 414. The low-speed expansion port 414, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 400 may be implemented in a number of different forms, as shown in the figure. For example, it may be implemented as a standard server 420, or multiple times in a group of such servers. In addition, it may be implemented in a personal computer such as a laptop computer 422. It may also be implemented as part of a rack server system 424. Alternatively, components from the computing device 400 may be combined with other components in a mobile device (not shown), such as a mobile computing device 450. Each of such devices may contain one or more of the computing device 400 and the mobile computing device 450, and an entire system may be made up of multiple computing devices communicating with each other.

The mobile computing device 450 includes a processor 452, a memory 464, an input/output device such as a display 454, a communication interface 466, and a transceiver 468, among other components. The mobile computing device 450 may also be provided with a storage device, such as a micro-drive or other device, to provide additional storage. Each of the processor 452, the memory 464, the display 454, the communication interface 466, and the transceiver 468, are interconnected using various buses, and several of the components may be mounted on a common motherboard or in other manners as appropriate.

The processor 452 can execute instructions within the mobile computing device 450, including instructions stored in the memory 464. The processor 452 may be implemented as a chipset of chips that include separate and multiple analog and digital processors. The processor 452 may provide, for example, for coordination of the other components of the mobile computing device 450, such as control of user interfaces, applications run by the mobile computing device 450, and wireless communication by the mobile computing device 450.

The processor 452 may communicate with a user through a control interface 458 and a display interface 456 coupled to the display 454. The display 454 may be, for example, a TFT (Thin-Film-Transistor Liquid Crystal Display) display or an OLED (Organic Light Emitting Diode) display, or other appropriate display technology. The display interface 456 may comprise appropriate circuitry for driving the display 454 to present graphical and other information to a user. The control interface 458 may receive commands from a user and convert them for submission to the processor 452. In addition, an external interface 462 may provide communication with the processor 452, so as to enable near area communication of the mobile computing device 450 with other devices. The external interface 462 may provide, for example, for wired communication in some implementations, or for wireless communication in other implementations, and multiple interfaces may also be used.

The memory 464 stores information within the mobile computing device 450. The memory 464 can be implemented as one or more of a computer-readable medium or media, a volatile memory unit or units, or a non-volatile memory unit or units. An expansion memory 474 may also be provided and connected to the mobile computing device 450 through an expansion interface 472, which may include, for example, a SIMM (Single In Line Memory Module) card interface. The expansion memory 474 may provide extra storage space for the mobile computing device 450, or may also store applications or other information for the mobile computing device 450. Specifically, the expansion memory 474 may include instructions to carry out or supplement the processes described above, and may include secure information also. Thus, for example, the expansion memory 474 may be provide as a security module for the mobile computing device 450, and may be programmed with instructions that permit secure use of the mobile computing device 450. In addition, secure applications may be provided via the SIMM cards, along with additional information, such as placing identifying information on the SIMM card in a non-hackable manner.

The memory may include, for example, flash memory and/or NVRAM memory (non-volatile random access memory), as discussed below. In some implementations, instructions are stored in an information carrier. that the instructions, when executed by one or more processing devices (for example, processor 452), perform one or more methods, such as those described above. The instructions can also be stored by one or more storage devices, such as one or more computer- or machine-readable mediums (for example, the memory 464, the expansion memory 474, or memory on the processor 452). In some implementations, the instructions can be received in a propagated signal, for example, over the transceiver 468 or the external interface 462.

The mobile computing device 450 may communicate wirelessly through the communication interface 466, which may include digital signal processing circuitry where necessary. The communication interface 466 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), among others. Such communication may occur, for example, through the transceiver 468 using a radio-frequency. In addition, short-range communication may occur, such as using a Bluetooth, WiFi, or other such transceiver (not shown). In addition, a GPS (Global Positioning System) receiver module 470 may provide additional navigation- and location-related wireless data to the mobile computing device 450, which may be used as appropriate by applications running on the mobile computing device 450.

The mobile computing device 450 may also communicate audibly using an audio codec 460, which may receive spoken information from a user and convert it to usable digital information. The audio codec 460 may likewise generate audible sound for a user, such as through a speaker, e.g., in a handset of the mobile computing device 450. Such sound may include sound from voice telephone calls, may include recorded sound (e.g., voice messages, music files, etc.) and may also include sound generated by applications operating on the mobile computing device 450.

The mobile computing device 450 may be implemented in a number of different forms, as shown in the figure. For example, it may be implemented as a cellular telephone 480. It may also be implemented as part of a smart-phone 482, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network (LAN), a wide area network (WAN), and the Internet. In some implementations, the systems and techniques described here can be implemented on an embedded system where speech recognition and other processing is performed directly on the device.

The computing system can include clients and servers. A client and server are generally remote from each other and typically interact through a communication network. The relationship of client and server arises by virtue of computer programs running on the respective computers and having a client-server relationship to each other.

## Claims

1. A computer-implemented method, comprising:
receiving, by a computing device, speech audio samples;
receiving, by a computing device, noise samples; the method being **characterised by** further comprising:
for each frequency band of multiple different frequency bands:
determining, by the computing device, a noise energy level of each noise sample and a speech audio energy level of each speech audio sample for the frequency band;
generating, by the computing device, noisy speech audio samples by combining each noise sample and each speech audio sample for the frequency band; and
training, by the computing device and using machine learning, a model for the frequency band using the noise energy level of each noise sample, the speech audio energy level of each speech audio sample, and the noisy speech audio samples, wherein the model for the frequency band is trained to determine a speech audio energy level of input audio data and a noise energy level of the input audio data.

2. The method of claim 1, further comprising for each frequency band, generating filtered audio samples for the frequency band from the speech audio samples and the noise sample.

3. The method of claim 1 or 2, wherein each model for a frequency band receives, as input, audio filtered using a band filter for the frequency band.

4. The method of claims 2 or 3, comprising:
receiving, by the computing device, first audio data for a first audio channel;
transmitting, by the computing device, the first audio data;
while receiving and transmitting the first audio data:
receiving, by the computing device, second audio data for a second audio channel;
determining, by the computing device and using the models for the frequency bands, a first speech audio energy level of the first audio data and a first noise energy level of the first audio data by providing the first audio data as a first input to the models;
determining, by the computing device and using the models for the frequency bands, a second speech audio energy level of the second audio data and a second noise energy level of the second audio data by providing the second audio data as a second input to the models; and
based on the first speech audio energy level, the first noise energy level, the second speech audio energy level, and the second noise energy level, determining, by the computing device, whether to switch to transmitting the second audio data or continue transmitting the first audio data; and
based on determining whether to switch to transmitting the second audio data or continue transmitting the first audio data, transmitting, by the computing device, the first audio data or the second audio data, wherein audio data for a particular model of a particular frequency band is filtered using the band filter for the particular frequency band before said audio data is provided to said particular model.

5. The method of claims 1 to 4, further comprising:
storing, by a model trainer, the trained model in a respective speech and noise estimation model, wherein each model in the speech and noise estimation models is configured to indicate whether it is configured to estimate the speech and noise levels for a whole audio sample or for a particular frequency band.

6. The method of claims 1 to 5, wherein each model in the speech and noise estimation models is configured to indicate whether any filtering should be applied to the audio before providing the audio to a respective model.

7. A system for training speech level estimation models for use in an audio conference system, the system comprising a computing device that is configured to:
receive speech audio samples;
receive noise samples;
for each frequency band of multiple different frequency bands:
determine a noise energy level of each noise sample and a speech audio energy level of each speech audio sample for the frequency band;
generate noisy speech audio samples by combining each noise sample and each speech audio sample for the frequency band; and
train, using machine learning, a model for the frequency band using the noise energy level of each noise sample, the speech audio energy level of each speech audio sample, and the noisy speech audio samples, wherein the model for the frequency band is trained to determine a speech audio energy level of input audio data and a noise energy level of the input audio data.

8. The system of claim 7, wherein the computing device is further configured to generate for each frequency band, filtered audio samples for the frequency band from the speech audio samples and the noise sample.

9. The system of claims 7 or 8, wherein each model for a frequency band is configured to receive, as input, audio filtered using a band filter for the frequency band.

10. The system of claims 8 or 9, wherein the computing device is further configured to:
receive first audio data for a first audio channel;
transmit the first audio data;
while receiving and transmitting the first audio data:
receive second audio data for a second audio channel;
determine and use the models for the frequency bands, a first speech audio energy level of the first audio data and a first noise energy level of the first audio data by providing the first audio data as a first input to the models;
determine and use the models for the frequency bands, a second speech audio energy level of the second audio data and a second noise energy level of the second audio data by providing the second audio data as a second input to the models; and
based on the first speech audio energy level, the first noise energy level, the second speech audio energy level, and the second noise energy level, determine whether to switch to transmitting the second audio data or continue transmitting the first audio data; and
based on determining whether to switch to transmitting the second audio data or continue transmitting the first audio data, transmit the first audio data or the second audio data, wherein audio data for a particular model of a particular frequency band is filtered using the band filter for the particular frequency band before said audio data is provided to said particular model.

11. The system of claims 8 to 10, wherein the system further comprises a model trainer that is configured to:
store the trained model in a respective speech and noise estimation model, wherein each model in the speech and noise estimation models is configured to indicate whether it is configured to estimate the speech and noise levels for a whole audio sample or for a particular frequency band.

12. The system of claims 8 to 11, wherein each model in the speech and noise estimation models is configured to indicate whether any filtering should be applied to the audio before providing the audio to a respective model.

13. A computer readable medium, comprising instructions which when executed by a processor, causes the processor to carry out the method steps of any of claims 1 to 6.

## Patentansprüche

1. Ein computer-implementiertes Verfahren, das Folgendes aufweist:
Empfangen von Sprach-Audioproben durch ein Rechenvorrichtung;
Empfangen von Rauschproben durch eine Rechenvorrichtung;
wobei das Verfahren **dadurch gekennzeichnet ist, dass** es weiterhin aufweist:
für jedes Frequenzband von mehreren verschiedenen Frequenzbändern:
Bestimmen eines Rauschenergiepegels jeder Rauschprobe und eines Sprach-Audioenergiepegels jeder Sprach-Audioprobe für das Frequenzband durch die Rechenvorrichtung;
Erzeugen von verrauschten Sprach-Audioproben durch die Rechenvorrichtung durch Kombinieren jeder Rauschprobe und jeder Sprach-Audioprobe für das Frequenzband; und
Trainieren eines Modells für das Frequenzband, durch die Rechenvorrichtung und unter Verwendung von maschinellem Lernen, unter Verwendung des Rauschenergiepegels jeder Rauschprobe, des Sprach-Audioenergiepegels jeder Sprach-Audioprobe und der verrauschten Sprach-Audioproben, wobei das Modell für das Frequenzband trainiert wird, um einen Sprach-Audioenergiepegel von Eingangsaudiodaten und einen Rauschenergiepegel der Eingangsaudiodaten zu bestimmen.

2. Verfahren nach Anspruch 1, das ferner für jedes Frequenzband, das Erzeugen gefilterter Audioproben für das Frequenzband aus den Sprach-Audioproben und den Rauschproben aufweist.

3. Verfahren nach Anspruch 1 oder 2, wobei jedes Modell für ein Frequenzband als Eingang Audiosignale empfängt, die mit einem Bandfilter für das Frequenzband gefiltert wurden.

4. Verfahren nach Anspruch 2 oder 3, das ferner aufweist:
Empfangen von ersten Audiodaten für einen ersten Audiokanal durch die Rechenvorrichtung;
Senden der ersten Audiodaten durch die Rechenvorrichtung;
während des Empfangens und Sendens der ersten Audiodaten:
Empfangen von zweiten Audiodaten für einen zweiten Audiokanal durch die Rechnereinrichtung;
Bestimmen eines ersten Sprach-Audioenergiepegels der ersten Audiodaten und eines ersten Rauschenergiepegels der ersten Audiodaten durch die Rechenvorrichtung und unter Verwendung der Modelle für die Frequenzbänder, indem die ersten Audiodaten als eine erste Eingabe für die Modelle bereitgestellt werden;
Bestimmen eines zweiten Sprach-Audioenergiepegels der zweiten Audiodaten und eines zweiten Rauschenergiepegels der zweiten Audiodaten durch die Rechenvorrichtung und unter Verwendung der Modelle für die Frequenzbänder, indem die zweiten Audiodaten als eine zweite Eingabe für die Modelle bereitgestellt werden; und
basierend auf dem ersten Sprach-Audioenergiepegel, dem ersten Rauschenergiepegel, dem zweiten Sprach-Audioenergiepegel und dem zweiten Rauschenergiepegel, Bestimmen durch die Rechenvorrichtung, ob zum Senden der zweiten Audiodaten umgeschaltet oder das Senden der ersten Audiodaten fortgesetzt werden soll; und
basierend auf der Bestimmung, ob zum Senden der zweiten Audiodaten umgeschaltet werden soll oder die ersten Audiodaten weiter gesendet werden sollen, Senden der ersten Audiodaten oder der zweiten Audiodaten durch die Rechenvorrichtung, wobei Audiodaten für ein bestimmtes Modell eines bestimmten Frequenzbandes unter Verwendung des Bandfilters für das bestimmte Frequenzband gefiltert werden, bevor die Audiodaten dem bestimmten Modell bereitgestellt werden.

5. Verfahren nach einem der Ansprüche 1 bis 4, das ferner aufweist:
Speichern des trainierten Modells in einem jeweiligen Sprach- und Rauschschätzungsmodell durch einen Modelltrainer, wobei jedes Modell in den Sprach- und Rauschschätzungsmodellen konfiguriert ist, anzuzeigen, ob es konfiguriert ist, die Sprach- und Rauschpegel für eine ganze Audioprobe oder für ein bestimmtes Frequenzband zu schätzen.

6. Verfahren nach einem der Ansprüche 1 bis 5, wobei jedes Modell in den Sprach- und Rauschschätzungsmodellen konfiguriert ist, anzuzeigen, ob irgendeine Filterung auf das Audiomaterial angewendet werden sollte, bevor das Audiomaterial einem entsprechenden Modell zugeführt wird.

7. System zum Trainieren von Sprachpegelschätzungsmodellen zur Verwendung in einem Audiokonferenzsystem, wobei das System eine Rechenvorrichtung umfasst, die konfiguriert ist, um:
Sprach-Audioproben zu empfangen;
Rauschproben zu empfangen;
für jedes Frequenzband von mehreren verschiedenen Frequenzbändern, folgende Schritte auszuführen:
Bestimmen eines Rauschenergiepegels jeder Rauschprobe und eines Sprach-Audioenergiepegels jeder Sprach-Audioprobe für das Frequenzband;
Erzeugen verrauschter Sprach-Audioproben durch Kombinieren jeder Rauschprobe und jeder Sprach-Audioprobe für das Frequenzband; und
Trainieren, unter Verwendung von maschinellem Lernen, eines Modells für das Frequenzband unter Verwendung des Rauschenergiepegels jeder Rauschprobe, des Sprach-Audioenergiepegels jeder Sprach-Audioprobe und der verrauschten Sprach-Audioproben, wobei das Modell für das Frequenzband trainiert wird, um einen Sprach-Audioenergiepegel von Eingangsaudiodaten und einen Rauschenergiepegel der Eingangsaudiodaten zu bestimmen.

8. System nach Anspruch 7, wobei die Rechenvorrichtung ferner konfiguriert ist, für jedes Frequenzband gefilterte Audioproben für das Frequenzband aus den Sprach-Audioproben und den Rauschproben zu erzeugen.

9. System nach Anspruch 7 oder 8, wobei jedes Modell für ein Frequenzband konfiguriert ist, als Eingang Audiosignale zu empfangen, die mit einem Bandfilter für das Frequenzband gefiltert wurden.

10. Das System nach Anspruch 8 oder 9, wobei die Rechenvorrichtung ferner konfiguriert ist, zum:
Empfangen von ersten Audiodaten für einen ersten Audiokanal;
Senden der ersten Audiodaten;
während des Empfangens und Sendens der ersten Audiodaten:
Empfangen von zweiten Audiodaten für einen zweiten Audiokanal;
Bestimmen und Verwenden der Modelle für die Frequenzbänder, einen ersten Sprach-Audioenergiepegel der ersten Audiodaten und einen ersten Rauschenergiepegel der ersten Audiodaten, durch Bereitstellen der ersten Audiodaten als eine erste Eingabe für die Modelle bereitgestellt werden;
Bestimmen und Verwenden der Modelle für die Frequenzbänder, einen zweiten Sprach-Audioenergiepegel der zweiten Audiodaten und einen zweiten Rauschenergiepegel der zweiten Audiodaten durch Bereitstellen der zweiten Audiodaten als eine zweite Eingabe für die Modelle; und
basierend auf dem ersten Sprach-Audioenergiepegel, des ersten Rauschenergiepegels, des zweiten Sprach-Audioenergiepegels und des zweiten Rauschenergiepegels, Bestimmen, ob auf das Senden der zweiten Audiodaten umgeschaltet oder das Senden der ersten Audiodaten fortgesetzt werden soll; und
basierend auf der Bestimmung, ob zum Senden der zweiten Audiodaten umgeschaltet werden soll oder die ersten Audiodaten weiter gesendet werden sollen, Senden der ersten Audiodaten oder der zweiten Audiodaten, wobei Audiodaten für ein bestimmtes Modell eines bestimmten Frequenzbandes unter Verwendung des Bandfilters für das bestimmte Frequenzband gefiltert werden, bevor die Audiodaten dem bestimmten Modell bereitgestellt werden.

11. System nach einem der Ansprüche 8 bis 10, wobei das System ferner einen Modelltrainer umfasst, der konfiguriert ist, zum:
Speichern des trainierten Modells in einem jeweiligen Sprach- und Rauschschätzungsmodell, wobei jedes Modell in den Sprach- und Rauschschätzungsmodellen konfiguriert ist, anzuzeigen, ob es konfiguriert ist, die Sprach- und Rauschpegel für eine ganze Audioprobe oder für ein bestimmtes Frequenzband schätzt.

12. System nach einem der Ansprüche 8 bis 11, wobei jedes Modell in den Sprach- und Rauschschätzungsmodellen konfiguriert ist, anzuzeigen, ob irgendeine Filterung auf das Audiomaterial angewendet werden sollte, bevor das Audiomaterial einem entsprechenden Modell zugeführt wird.

13. Computerlesbares Medium, das Anweisungen aufweist, die, wenn sie von einem Prozessor ausgeführt werden, den Prozessor veranlassen, die Verfahrensschritte nach einem der Ansprüche 1 bis 6 auszuführen.

## Revendications

1. Un procédé mis en oeuvre par ordinateur, comprenant :
le fait, par un dispositif informatique, de recevoir des échantillons audio de parole ;
le fait, par un dispositif informatique, de recevoir des échantillons de bruit ;
le procédé étant **caractérisé en ce qu'**il comprend en outre :
pour chaque bande de fréquences de plusieurs bandes de fréquences différentes :
le fait, par le dispositif informatique, de déterminer un niveau d'énergie de bruit de chaque échantillon de bruit et un niveau d'énergie audio de parole de chaque échantillon audio de parole pour la bande de fréquence ;
le fait, par le dispositif informatique, de générer des échantillons audio de parole bruités en combinant chaque échantillon de bruit et chaque échantillon audio de parole pour la bande de fréquence ; et
le fait, par le dispositif informatique et en utilisant un apprentissage automatique, de réaliser l'apprentissage d'un modèle pour la bande de fréquence en utilisant le niveau d'énergie de bruit de chaque échantillon de bruit, le niveau d'énergie audio de parole de chaque échantillon audio de parole et les échantillons audio de parole bruités, le modèle pour la bande de fréquence ayant fait l'objet d'un apprentissage pour déterminer un niveau d'énergie audio de parole de données audio d'entrée et un niveau d'énergie de bruit des données audio d'entrée.

2. Le procédé selon la revendication 1, comprenant en outre pour chaque bande de fréquence, le fait de générer des échantillons audio filtrés pour la bande de fréquence à partir des échantillons audio de parole et de l'échantillon de bruit.

3. Le procédé selon la revendication 1 ou la revendication 2, dans lequel chaque modèle pour une bande de fréquence reçoit, en entrée, de l'audio filtré en utilisant un filtre de bande pour la bande de fréquence.

4. Le procédé selon les revendications 2 ou 3, comprenant :
le fait, par le dispositif informatique, de recevoir des premières données audio pour un premier canal audio ;
le fait, par le dispositif informatique, de transmettre les premières données audio ;
lors de la réception et de la transmission des premières données audio :
le fait, par le dispositif informatique, de recevoir des deuxièmes données audio pour un deuxième canal audio ;
le fait, par le dispositif informatique et en utilisant les modèles pour les bandes de fréquence, de déterminer un premier niveau d'énergie audio de parole des premières données audio et un premier niveau d'énergie de bruit des premières données audio en fournissant aux modèles les premières données audio en tant que première entrée ;
le fait, par le dispositif informatique et en utilisant les modèles pour les bandes de fréquences, de déterminer un deuxième niveau d'énergie audio de parole des deuxièmes données audio et un deuxième niveau d'énergie de bruit des deuxièmes données audio en fournissant les deuxièmes données audio en tant que deuxième entrée aux modèles ; et
en fonction du premier niveau d'énergie audio de parole, du premier niveau d'énergie de bruit, du deuxième niveau d'énergie audio de parole et du deuxième niveau d'énergie de bruit, le fait, par le dispositif informatique, de déterminer s'il faut passer à la transmission des deuxièmes données audio ou continuer à transmettre les premières données audio ; et
selon la détermination du point de savoir s'il faut passer à la transmission des deuxièmes données audio ou continuer à transmettre les premières données audio, le fait, par le dispositif informatique, de transmettre les premières données audio ou les deuxièmes données audio, des données audio pour un modèle particulier d'une fréquence de bande particulière étant filtrées en utilisant le filtre de bande pour la bande de fréquences particulière avant que lesdites données audio ne soient fournies audit modèle particulier.

5. Le procédé selon les revendications 1 à 4, comprenant en outre :
le fait, par un système d'apprentissage de modèles, de stocker le modèle ayant fait l'objet d'un apprentissage dans un modèle d'estimation de parole et de bruit respectif, chaque modèle dans les modèles d'estimation de parole et de bruit étant configuré pour indiquer s'il est configuré pour estimer les niveaux de parole et de bruit pour l'ensemble d'un échantillon audio ou pour une bande de fréquence particulière.

6. Le procédé selon les revendications 1 à 5, dans lequel chaque modèle dans les modèles d'estimation de parole et de bruit est configuré pour indiquer si un quelconque filtrage doit être appliqué à l'audio avant de fournir l'audio à un modèle respectif.

7. Un système d'apprentissage de modèles d'estimation de niveau de parole destinés à être utilisés dans un système de conférence audio, le système comprenant un dispositif informatique qui est configuré pour :
recevoir des échantillons audio de parole ;
recevoir des échantillons de bruit ;
pour chaque bande de fréquences de plusieurs bandes de fréquences différentes :
déterminer un niveau d'énergie de bruit de chaque échantillon de bruit et un niveau d'énergie audio de parole de chaque échantillon audio de parole pour la bande de fréquence ;
générer des échantillons audio de parole bruités en combinant chaque échantillon de bruit et chaque échantillon audio de parole pour la bande de fréquences ; et
réaliser, en utilisant un apprentissage automatique, un apprentissage d'un modèle pour la bande de fréquence en utilisant le niveau d'énergie de bruit de chaque échantillon de bruit, le niveau d'énergie audio de parole de chaque échantillon audio de parole et les échantillons audio de parole bruités, le modèle pour la bande de fréquence ayant fait l'objet d'un apprentissage de façon à déterminer un niveau d'énergie audio de parole de données audio d'entrée et un niveau d'énergie de bruit des données audio d'entrée.

8. Le système selon la revendication 7, dans lequel le dispositif informatique est en outre configuré pour générer pour chaque bande de fréquence, des échantillons audio filtrés pour la bande de fréquence à partir des échantillons audio de parole et de l'échantillon de bruit.

9. Le système selon les revendications 7 ou 8, dans lequel chaque modèle pour une bande de fréquence est configuré pour recevoir, en entrée, de l'audio filtré en utilisant un filtre de bande pour la bande de fréquence.

10. Le système selon les revendications 8 ou 9, dans lequel le dispositif informatique est en outre configuré pour :
recevoir des premières données audio pour un premier canal audio ;
transmettre les premières données audio ;
lors de la réception et de la transmission des premières données audio :
recevoir des deuxièmes données audio pour un deuxième canal audio ;
déterminer et utiliser les modèles pour les bandes de fréquences, un premier niveau d'énergie audio de parole des premières données audio et un premier niveau d'énergie de bruit des premières données audio en fournissant aux modèles les premières données audio en tant que première entrée ;
déterminer et utiliser les modèles pour les bandes de fréquences, un deuxième niveau d'énergie audio de parole des deuxièmes données audio et un deuxième niveau d'énergie de bruit des deuxièmes données audio en fournissant aux modèles les deuxièmes données audio en tant que deuxième entrée ; et
sur la base du premier niveau d'énergie audio de parole, du premier niveau d'énergie de bruit, du deuxième niveau d'énergie audio de parole et du deuxième niveau d'énergie de bruit, déterminer s'il faut passer à la transmission des deuxièmes données audio ou continuer à transmettre les premières données audio ; et
selon la détermination du point de savoir s'il faut passer à la transmission des deuxièmes données audio ou continuer à transmettre les premières données audio, transmettre les premières données audio ou les deuxièmes données audio, les données audio pour un modèle particulier d'une bande de fréquence particulière étant filtrées en utilisant le filtre de bande pour la bande de fréquence particulière avant que lesdites données audio ne soient fournies audit modèle particulier.

11. Le système selon les revendications 8 à 10, dans lequel le système comprend en outre un système d'apprentissage de modèle qui est configuré pour :
stocker le modèle formé dans un modèle d'estimation de parole et de bruit respectif, chaque modèle dans les modèles d'estimation de parole et de bruit étant configuré pour indiquer s'il est configuré pour estimer les niveaux de parole et de bruit pour l'ensemble d'un échantillon audio ou pour une bande de fréquence particulière.

12. Le système selon les revendications 8 à 11, dans lequel chaque modèle dans les modèles d'estimation de parole et de bruit est configuré pour indiquer si un quelconque filtrage doit être appliqué à l'audio avant de fournir l'audio à un modèle respectif.

13. Un support lisible par ordinateur, comprenant des instructions qui, lorsqu'elles sont exécutées par un processeur, amènent le processeur à mettre en oeuvre les étapes de procédé de l'une quelconque des revendications 1 à 6.
